# EUROPÄISCHE PATENTANMELDUNG

(11) **EP 0 552 458 A1**
(43) Veröffentlichungstag der Anmeldung: **28.07.1993**
(21) Anmeldenummer: 92121113.2
(22) Anmeldetag: 11.12.1992
(51) Int. Cl.: B60G 11/46, F16F 9/05

(54) **Fahrzeug-Achsaufhängung**

(30) Priorität: 22.01.1992 DE 4201629
(71) Anmelder: Otto Sauer Achsenfabrik Keilberg, D-63856 Bessenbach (DE)
(72) Erfinder: Büttner, Josef, c/o KEIL & SCHAAFHAUSEN, W-6000 Frankfurt am Main 1 (DE)
(74) Vertreter: Keil, Rainer A., Dipl.-Phys. Dr.

(57) **Zusammenfassung**

Die Erfindung bezieht sich auf eine Aufhängevorrichtung für eine einen Achskörper (1) aufweisende Fahrzeugachse, mit wenigstens je einer Blattfederanordnung (2) beidseits der senkrechten Fahrzeuglängsmittelebene, welche an ihrem vorderen Ende an einem chassisfesten Lagerpunkt (3) angelenkt und im Abstand davon starr mit dem Achskörper verspannt ist und auf deren hinterem freien Ende sich das Fahrzeugchassis über eine als Tauchkolbenanordnung (8) ausgebildete, einen zylindrischen, vorzugsweise mit kreisrundem Querschnitt ausgestatteten Tauchkolben und einen Luftfederbalg aufweisende Luftfeder (5) abstützt, wobei zur Vergrößerung des Achsfederweges die geometrische Tauchkolben-Mittelachse und im wesentlichen dementsprechend der Tauchkolbenmantel (9) - von dem Lagerpunkt (3) aus gesehen - konkav gekrümmt sind.

## Beschreibung

Die Erfindung bezieht sich auf eine Aufhängung für eine einen Achskörper aufweisende Fahrzeugachse, mit wenigstens je einer Blattfederanordnung beidseits der senkrechten Fahrzeuglängsmittelebene, welche an ihrem vorderen Ende an einem chassisfesten Lagerpunkt angelenkt und im Abstand davon starr mit dem Achskörper verspannt ist und auf deren z.B. von einem nach hinten ragenden Tragarm gebildeten hinteren freien Ende sich das Fahrzeugchassis über eine als Tauchkolbenanordnung ausgebildete, einen zylindrischen, vorzugsweise mit kreisrundem Querschnitt ausgestatteten Tauchkolben und einen Luftfederbalg aufweisende Luftfeder abstützt.

Derartige Fahrzeug-Achsaufhängungen sind beispielsweise aus der DE 21 00 048 C2, EP 0 137 953 A2, EP 0 306 849 A3 oder DE 40 07 634 A1 bekannt. Sie unterscheiden sich im wesentlichen durch die spezielle Ausgestaltung der Blattfederanordnung und deren einzelnen Federblättern sowie durch Zusatzeinrichtungen, wie Achsanhebevorrichtung oder Höhenverstellvorrichtung. Beispielsweise aus der DE 38 24 542 A1 ist eine Tauchkolbenanordnung bekannt, welche bei solchen luftgefederten Achsaggregaten Einsatz finden kann. Derartige Luftfederungen bestehen im wesentlichen aus einem Luftfederbalg, häufig mit integriertem Gummipuffer als Anschlag, einem Tauchkolben und einem Tragarm der seinerseits auf bzw. unter der Fahrzeugachse montiert ist und welcher entweder einstückig mit dem Tragblatt der Blattfederanordnung oder als gesondertes Bauteil ausgebildet ist. Der Luftfederbalg ist ein mit Luft füllbarer rotationssymmetrischer Gummisack, welche über eine oben befestigte Montageplatte aus Stahl als Krafteinleitungselement mit dem Fahrzeugrahmen oder einer Höhenverstellvorrichtung verbunden ist. An seiner Unterseite ist ein rondenförmiger Spannteller aus Stahl anvulkanisiert oder verklemmt, welcher zum Inneren des Luftfederbalges hin den Gummipuffer tragen kann. Die konvex ausgebildete Unterseite des Spanntellers liegt formschlüssig in einer entsprechend konkav geformten oberen Mulde des Tauchkolbenbodens und ist mit diesem fest verschraubt. Der Tauchkolben stützt sich auf dem Tragarm ab. Allen bekannten Tauchkolben ist eine gerade Mittelachse mit entsprechend geradzylindrischem Kolbenmantel gemeinsam.

Bei den genannten Luftfeder-Achsaufhängungen beschreiben alle Teile über den gesamten Achsfederweg einen Kreisbogen. Für die üblicherweise erforderlichen Achsfederwege oder -hübe sind Führungslenkerlängen zwischen Drehpunkt und Mitte des Achskörpers von etwa 500 mm in Kombination mit Luftfederbälgen mit Hüben zwischen 300 und 400 mm, welche hinter dem Achskörper angeordnet sind, gebräuchlich. Mit solchen Konstruktionen können Achsfederwege bis zu 250 mm erreicht werden. Für den gewöhnlichen Wechselverkehr ist dies ausreichend. Da bei Luftfederungen der Achsfederhub auch gleichzeitig der nutzbare Weg für den Achslastausgleich bei Mehrfachachsaggregaten darstellt, ist dieser Hub in der Regel auch für den Geländeeinsatz derartiger Achsaggregate ausreichend. Eine Vergrößerung des Achsfederweges wurde bisher dadurch erreicht, daß der Abstand zwischen der Blattfederlagerung und der Mitte des Achskörpers vergrößert oder/und die Hubwege der Luftfedern verlängert wurden. Hierdurch sind jedoch nur Achsfederwege bis zu 350 mm realistisch. Derartige Achsfederwege werden beispielsweise bei Tiefladeranhängern, deren Ladehöhe zugunsten des Gesamtvolumens niedriger gehalten ist und die an Laderampen üblicher Höhe be- und entladen werden sollen, erforderlich. Dort muß es möglich sein, aus der Fahrhöhe heraus die Ladeplattform so weit anzuheben, daß sie höhengleich mit der Rampe steht. Sollen bei Luftfederkonstruktionen die Achsfederwege noch weiter erhöht werden, so stößt man allerdings an die Funktionsfähigkeit der Luftfederbälge, weil diese in Kombination mit geringen Balgdrücken (Leerfahrtsituation) mit ihren Ecken während der Einfederbewegungen innen gegen den Rollbalgteil des Luftfederbalges anlaufen. Außerdem wird der Luftfederbalg bei größerer Länge stärker aus seiner Richtung gedrückt, was sich nachteilig auf das Abrollverhalten zwischen dem Rollbalgteil des Luftfederbalges und dem Tauchkolben auswirkt. Für luftgefederte Sattelauflieger, welche als sog. Kombitrailer jeweils mit ihrem vorderen und hinteren Ende auf einem schienengebundenen Trägerfahrzeug (Dolly) gelagert werden, um einen Zug zu bilden, sind extrem große Achsfederwege erforderlich. Die Achsen derartiger Sattelauflieger werden alle mit Hilfe einer Achsanhebevorrichtung angehoben. Berücksichtigt man die Forderung der internationalen Bahnen, wie z.B. Tunneldurchfahrten, Kurven in Tunneln, Verschleiß der Waggonräder, Setzen der Waggonfederung sowie Durchfederung aller Teile, so werden Achsfederwege an luftgefederten Sattelaufliegern je nach Nationalität der Bahn bis zu 450 mm erforderlich.

Aufgabe der vorliegenden Erfindung ist es, mittels einer zuverlässigen und dennoch kostengünstigen Ausgestaltung einer Achsaufhängung der eingangs genannten Art unter Beibehaltung des bisherigen Luftfederprinzips derartig große Achsfederwege zu ermöglichen.

Diese Aufgabe wird erfindungsgemäß dadurch gelöst, daß die geometrische Tauchkolben-Mittelachse und im wesentlichen dementsprechend der Tauchkolbenmantel - von dem Lagerpunkt aus gesehen - konkav gekrümmt sind.

Aufgrund des hierdurch erreichten günstigeren Bewegungsablaufes wird erreicht, daß der kritische Abstand der oberen inneren Tauchkolbenecke von dem Luftfederbalg größer wird. Dadurch können größere Achsfederwege erreicht werden. Aus einem Vergleich der Tauchkolbenkennlinien (Achslast über Achsfederweg) ist erkennbar, daß bei der Verwendung eines erfindungsgemäß gebogenen Tauchkolbens ferner bei gleichem Balgdruck die Achslast über einen längeren Achsfederweg gehalten wird als bei bekannten Luftfederungen. Hierdurch wird ein sicherer Hebevorgang eines beladenen Fahrzeuges gewährleistet.

Besonders günstige Bewegungsverhältnisse werden dann erreicht, wenn in weiterer Ausgestaltung des Erfindungsgedankens der Krümmungsradius der geometrischen Tauchkolben-Mittelachse im wesentlichen dem Abstand des Lagerpunktes der Blattfederanordnung von der geometrischen Tauchkolben-Mittelachse entspricht.

Herkömmliche Tauchkolben haben für die Aufnahme einer Spannplatte des Luftfederbalges in ihrem oberen Kolbenboden eine äußere Mulde, welche an ihrem Umfang wenigstens teilweise von einem wulstartigen Kolbenrand umgeben ist. Wenn bei Verwendung eines solchen Tauchkolbens nach einem weiteren Merkmal der Erfindung die Höhe des Kolbenrandes zu der dem Lagerpunkt zugewandten Seite hin relativ zu dem Kolbenboden abfällt, kann erreicht werden, daß der kritische Abstand der oberen inneren Tauchkolbenecke zu dem Luftfederbalg vergrößert wird.

Bei einem ebensolchen Tauchkolben kann umgekehrt auch die Höhe des Kolbenrandes zu der dem Lagerpunkt abgewandten Seite hin relativ zu dem Kolbenboden abfallen. Mit Hilfe dieser Variante kann der Abstand der oberen äußeren Tauchkolbenecke von der Montageebene des Luftfederbalges vergrößert werden. Dies kann von Vorteil sein, wenn der Anschlag-Gummipuffer beim Absenken des Fahrzeuges so stark eingedrückt wird, daß die erhöhte Ecke des Tauchkolbens sonst innen gegen die Montageplatte des Luftfederbalges stoßen und bei weiterer Überlastung der dazwischenliegende Luftfederbalg-Rollteil eingeklemmt und möglicherweise beschädigt würde.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der folgenden Erfindung auch unabhängig von ihrer Zusammenfassung in den Ansprüchen oder deren Rückbeziehung.

Es zeigen:
- Fig. 1:: schematisch in Seitenansicht eine die Erfindung aufweisende Fahrzeug-Achsaufhängung im Bereich einer Fahrzeugachse, wobei die Anordnung am gegenüberliegenden Ende des Achskörpers vorzugsweise entsprechend ausgebildet ist,
- Fig. 1a:: im Vertikalschnitt einen nach der Erfindung ausgebildeten Tauchkolben für die Achsaufhängung nach Fig. 1,
- Fig. 1b:: die Ansicht B des Tauchkolbens von Fig. 1a,
- Fig. 2:: eine Seitenansicht entsprechend Fig. 1 für eine andere Ausgestaltung der Erfindung,
- Fig. 2a:: im Vertikalschnitt einen erfindungsgemäßen Tauchkolben für die Achsaufhängung nach Fig. 2,
- Fig. 3:: eine Seitenansicht ensprechend Fig. 1 für eine noch weitere Ausgestaltung der Erfindung,
- Fig. 3a:: im Vertikalschnitt einen erfindungsgemäßen Tauchkolben für die Achsaufhängung nach Fig. 3, und
- Fig. 4:: im Vergleich die Achslast-Achsfederweg-Kennlinien einer erfindungsgemäßen Luftfeder-Achsaufhängung mit gebogenem Tauchkolben im Vergleich zu der einer herkömmlichen Luftfeder-Achsaufhängung mit geradem Tauchkolben.

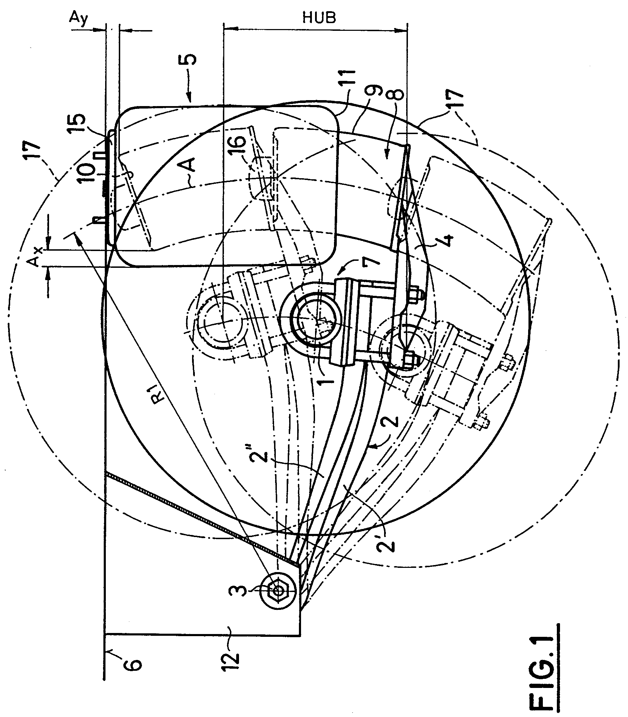

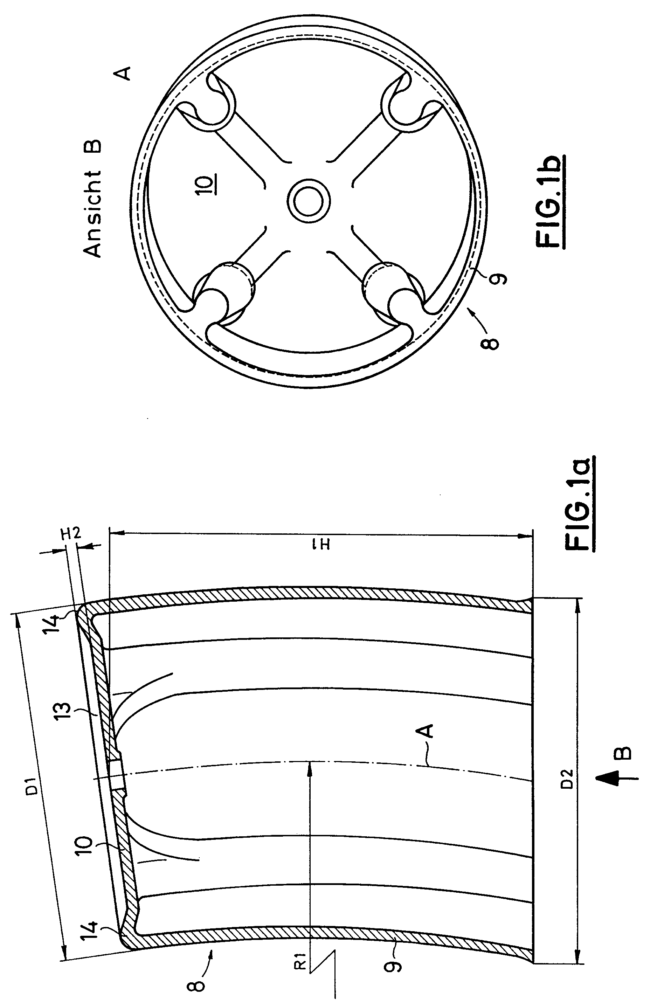

Die Aufhängevorrichtung gemäß Fig. 1 ist für eine mit einem starren Achskörper 1 ausgestattete Fahrzeugachse bestimmt. Der starre Achskörper 1 ist beidseitig der vertikalen Fahrzeug-Mittellängsebene starr mit einer Blattfederanordnung 2 verspannt, welche in dem dargestellten Fall aus einem unteren Tragfederblatt 2' und einem oberen Führungsfederblatt 2'' besteht. Die Federblätter 2', 2'' sind an ihrem vorderen Ende mittels nicht sichtbarer Federaugen auf einem einen Lagerpunkt 3 bildenden Lagerbolzen schwenkbar aufgenommen. Der Lagerpunkt 3 ist im unteren Bereich eines von dem Chassis 6 des Fahrzeuges nach unten wegragenden, in Vorwärtsfahrtrichtung des Fahrzeuges vor dem Achskörper 1 angeordneten Lagerbocks 12 vorgesehen. In einer Achseinspannung 7, welche die hinteren Enden der Blattfedern 2', 2'' mit dem Achskörper 1 verspannt, ist auch ein von dem Achskörper 1 aus gesehen zum hinteren Ende des Fahrzeuges ragender gesonderter Tragarm 4 mit eingespannt, welcher als unteres Auflager einer Luftfeder 5 dient. Die Luftfeder 5 besteht im wesentlichen aus einem als Tauchkolben 8 ausgebildeten Luftfederkolben und einem als Rollbalg ausgebildeten Luftfederbalg 11, welcher sich beim Einfedern auf dem Tauchkolben 8 abwälzt. Der Tauchkolben 8 sitzt auf dem hinteren freien Ende des Tragarms 4. An seiner Oberseite ist der Luftfederbalg 11 mittels einer Montageplatte 15 an dem Chassis 6 befestigt. Zwischen Luftfederbalg 11 und Chassis 6 kann aber auch, wie nach der DE 40 07 634 A1 vorgesehen, ein verstellbares Teil der Achsaufhängung vorgesehen sein, an welchem die Montageplatte 15 befestigt ist. Der nach oben weisende Kolbenboden 10 des Tauchkolbens 8, mit welcher das untere freie Ende des Luftfederbalges 11 verspannt ist, trägt einen in das Innere des Luftfederbalges 11 ragenden Gummipuffer 16 für den oberen Anschlag an der Unterseite der Montageplatte 15 bei der größtmöglichen Einfederung der Fahrzeugachse. In Fig. 1 sind die beweglichen Teile der Achsaufhängung zusammen mit einem Fahrzeugrad 17 in ausgezogenen Linien in einer mittleren Höhenlage dargestellt. Ferner ist in strichpunktierten Linien relativ zu dem Chassis die größtmögliche Einfederung nach oben und die größtmögliche Ausfederung nach unten angedeutet zusammen mit dem sich daraus ergebenden Achsfederweg (HUB), welcher nach der der Erfindung zugrundeliegenden Aufgabe bei Gewährleistung sicherer Fahreigenschaften möglichst groß sein soll. Bei der Federbewegung bewegen sich die einzelnen Teile der Achsaufhängung jeweils auf einem Kreisbogen um den Lagerpunkt 3. Der Federbalg 11 ist in ausgezogenen Linien der Klarheit wegen nur in seiner Mittelstellung veranschaulicht, nicht jedoch die Ein- und Ausrollbewegung, welche der Rollteil des Luftfederbalgs 11 bei der Federbewegung ausführt. Aus Fig. 1 ist auch zu erkennen, daß im oberen Anschlag, wenn also der Gummipuffer 16 an der Montageplatte 15 anliegt, die obere linke Kante des Tauchkolbens 8 einen Abstand Aₓ und die obere rechte Kante des Tauchkolbens 8 von der Unterseite der Montageplatte 15 einen Abstand A_{y} hat.

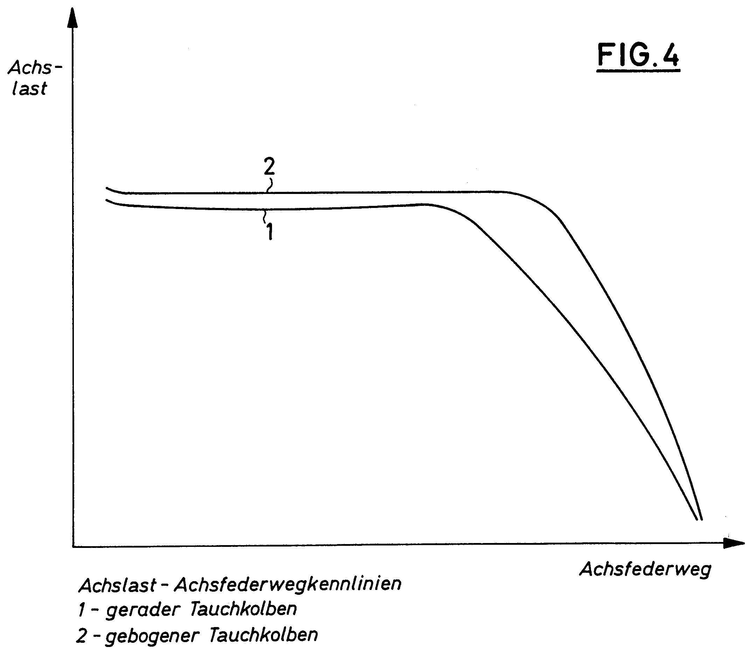

Die Achsaufhängung nach Fig. 1 enthält erfindungsgemäß einen gebogenen Tauchkolben 8, wie er in Fig. 1a im Schnitt dargestellt ist. Der Tauchkolben 8 hat dabei einen im wesentlichen kreiszylindrischen Tauchkolbenmantel 9 einer Höhe H1, einem Außendurchmesser D1 mit einer geringfügigen äußeren Aufweitung am unteren Ende auf einen Durchmesser D2. Die geometrische Tauchkolben-Mittelachse A ist leicht gekrümmt, und zwar mit einem Krümmungsradius R1, welcher, wie aus Fig. 1 ersichtlich, im wesentlichen dem Abstand des Lagerpunktes 3 von der geometrischen Tauchkolben-Mittelachse A entspricht. Der Tauchkolbenmantel 9 ist in Anpassung an den Krümmungsradius R1 so gebogen, daß er über seine gesamte Höhe H1 im wesentlichen gleichen Abstand von der geometrischen Tauchkolben-Mittelachse A hält. Bei einer solchen gebogenen Ausgestaltung des Tauchkolbens 8 wird erreicht, daß der kritische Abstand Aₓ der inneren oberen Kante des Tauchkolbens 8 von dem sich einrollenden Luftfederbalg 11 größer ist, als bei herkömmlichen Achsaufhängungen mit geradem Tauchkolben. Außerdem ergibt ein Vergleich zwischen den in Fig. 4 dargestellten Kennlinien von Luftfedern mit Luftfederbälgen, welche im Schlauchrollteil baugleich sind und auf gleichem Balgdruck gehalten werden, daß bei Verwendung eines erfindungsgemäß gebogenen Tauchkolbens 8 die Achslast über einen längeren Achsfederweg gehalten wird als bei Verwendung eines herkömmlichen geraden Tauchkolbens, was einen sichereren Hebevorgang eines beladenen Fahrzeuges gewährleistet (In Fig. 4 sind die beiden Kennlinien der Übersicht halber in der Höhe etwas auseinandergezogen).

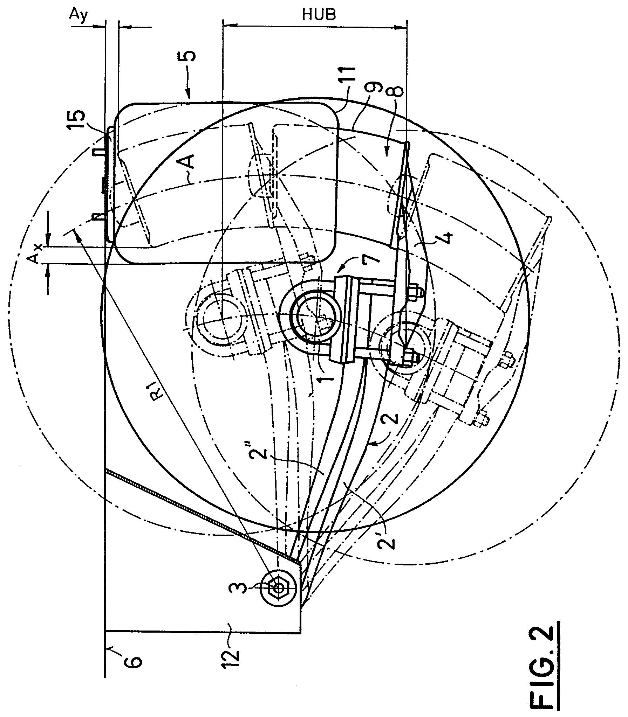

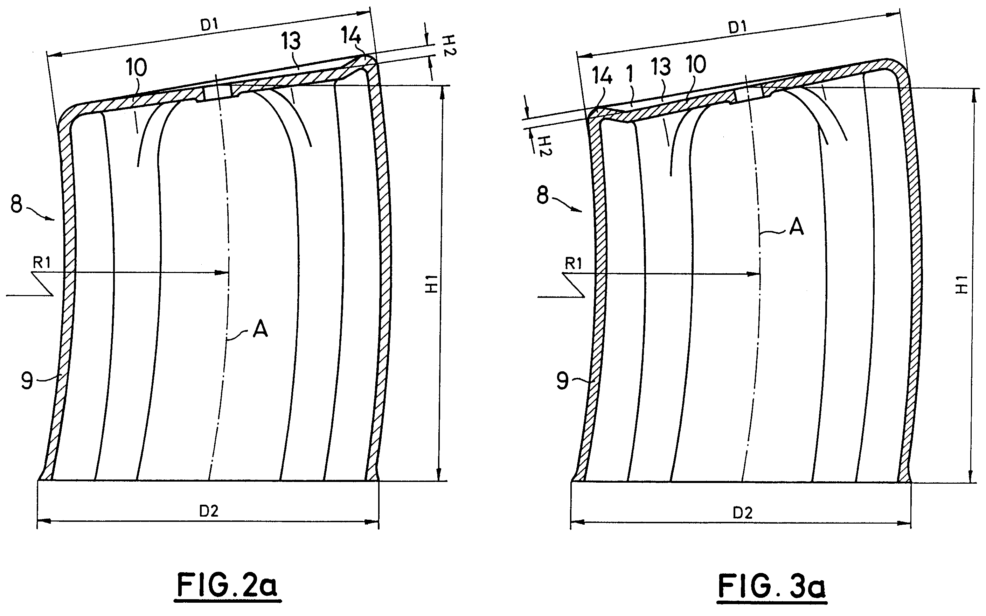

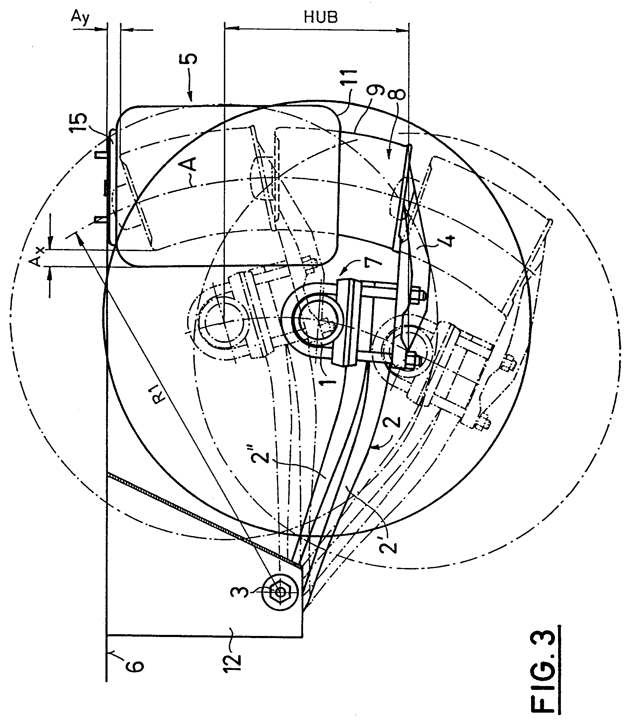

Wie aus Fig. 1a erkennbar ist der nach oben weisende Kolbenboden 10 für die Aufnahme einer Spannplatte des Luftfederbalges 11 mit einer äußeren Mulde 13 versehen. Die Mulde 13 ist an ihrem Umfang von einem wulstartig aufgebogenen Kolbenrand 14 umgeben. Die in den Fig. 2a und 3a im Vertikalschnitt dargestellten Tauchkolben 8 unterscheiden sich von dem in Fig. 1a dargestellten dadurch, daß entweder die Höhe H2 des Kolbenrandes 14 zu der dem Lagerpunkt 3 zugewandten Seite hin relativ zu dem Kolbenboden 10 abfällt (Fig. 2a) oder daß die Höhe H2 des Kolbenrandes 14 zu der dem Lagerpunkt 3 abgewandten Seite hin relativ zu dem Kolbenboden 10 abfällt (Fig. 3a). Die Achsaufhängung nach Fig. 2 ist mit einem Tauchkolben 8 gemäß Fig. 2a und die Achsaufhängung nach Fig. 3 mit einem Tauchkolben gemäß Fig. 3a ausgestattet. Man erkennt bei einem Vergleich der Fig. 2 und 3 mit Fig. 1, daß bei Verwendung eines Tauchkolbens 8 nach Fig. 2a der kritische Abstand Aₓ noch weiter vergrößert werden kann. Die Gefahr eines Auflaufens der oberen inneren Kante des Tauchkolbens 8 auf den Rollbalgteil des Luftfederbalges 11 wird dadurch noch weiter verringert und dementsprechend der Achsfederweg vergrößert. Bei Verwendung eines Tauchkolbens 8 gemäß Fig. 3a kann der Anstand A_{y} vergrößert werden. Dies ist vorteilhaft, wenn der als Anschlag dienende Gummipuffer 16 beim Absenken des Fahrzeuges so stark eingedrückt wird, daß die obere äußere Kante des Tauchkolbens 8 innen gegen die Montageplatte 15 des Luftfederbalges 11 stoßen und bei weiterer Belastung den dazwischenliegenden Schlauchrollteil des Luftfederbalges 11 einklemmen und möglicherweise beschädigen würde.

### Bezugszeichenliste

- 1: Achskörper
- 2: Blattfederanordnung
- 2': Tragfederblatt
- 2'': Führungsfederblatt
- 3: Lagerpunkt
- 4: Tragarm
- 5: Luftfeder
- 6: Chassis
- 7: Achseinspannung
- 8: Tauchkolben
- 9: Tauchkolbenmantel
- 10: Kolbenboden
- 11: Luftfederbalg (Rollbalg)
- 12: Lagerbock
- 13: Mulde
- 14: Kolbenrand
- 15: Montageplatte
- 16: Gummipuffer
- 17: Fahrzeugrad
- A: Tauchkolben-Mittelachse
- Aₓ: Abstand
- A_{y}: Abstand
- D1: Durchmesser
- D2: Durchmesser
- H1: Höhe
- H2: Höhe
- R1: Krümmungsradius

## Patentansprüche

1. Aufhängevorrichtung für eine einen Achskörper (1) aufweisende Fahrzeugachse, mit wenigstens je einer Blattfederanordnung (2) beidseits der senkrechten Fahrzeuglängsmittelebene, welche an ihrem vorderen Ende an einem chassisfesten Lagerpunkt (3) angelenkt und im Abstand davon starr mit dem Achskörper (1) verspannt ist und auf deren z.B. von einem nach hinten ragenden Tragarm (4) gebildeten hinteren freien Ende sich das Fahrzeugchassis (6) über eine als Tauchkolbenanordnung ausgebildete, einen zylindrischen, vorzugsweise mit kreisrundem Querschnitt ausgestatteten Tauchkolben (8) und einen Luftfederbalg (11) aufweisende Luftfeder (5) abstützt, dadurch gekennzeichnet, daß die geometrische Tauchkolben-Mittelachse (A) und im wesentlichen dementsprechend der Tauchkolbenmantel (9) - vom Lagerpunkt (3) aus gesehen - konkav gekrümmt sind.

2. Aufhängevorrichtung nach Anspruch 1, dadurch gekennzeichnet, daß der Krümmungsradius (R1) der geometrischen Tauchkolben-Mittelachse (A) im wesentlichen dem Abstand des Lagerpunktes (3) von der geometrischen Tauchkolben-Mittelachse (A) entspricht.

3. Aufhängevorrichtung nach Anspruch 1 oder 2, wobei der Kolbenboden eine äußere von einem wulstartigen Kolbenrand (14) an ihrem Umfang wenigstens teilweise umgebene Mulde (13) für die Aufnahme einer Spannplatte des Luftfederbalges (11) aufweist, dadurch gekennzeichnet, daß die Höhe (H2) des Kolbenrandes (14) zu der dem Lagerpunkt (3) zugewandten Seite hin relativ zu dem Kolbenboden (10) abfällt.

4. Aufhängevorrichtung nach Anspruch 1 oder 2, wobei der Kolbenboden eine äußere von einem wulstartigen Kolbenrand (14) an ihrem Umfang wenigstens teilweise umgebene Mulde (13) für die Aufnahme einer Spannplatte des Luftfederbalges (11) aufweist, dadurch gekennzeichnet, daß die Höhe (H2) des Kolbenrandes (14) zu der dem Lagerpunkt (3) abgewandten Seite hin relativ zu dem Kolbenboden (10) abfällt.
